# EUROPEAN PATENT APPLICATION

(11) **EP 4 744 506 A1**
(43) Date of publication of application: **20.05.2026**
(21) Application number: 24213920.2
(22) Date of filing: 19.11.2024
(51) Int. Cl.: A23J 3/14, A23J 3/16, A23J 3/18, A23J 3/22, A23J 3/26, A23J 1/00, A23J 1/12, A23P 30/25

(54) **EXTRUDED PROTEIN COMPOSITION**

(71) Applicant: Duynie Holding B.V., 2407 AJ Alphen aan den Rijn (NL)
(72) Inventor: VAN DEN ELZEN, Joost, 2407 AJ Alphen aan den Rijn (NL); LOMMERS, Marcel, 2407 AJ Alphen aan den Rijn (NL)
(74) Representative: Arnold & Siedsma

(57) **Abstract**

The invention pertains to an extruded protein composition comprising a vegetable protein and a protein-containing composition from an aleurone-containing plant-based material, wherein the weight ratio of protein and fat is at most 14.

## Description

The present invention relates to extruded protein compositions.

Extruded protein compositions have been developed to provide a plant-based alternative to meat. Examples of such extruded protein compositions include textured vegetable proteins (TVP) and high moisture meat analogues (HMMA). A wide variety of proteins is used in such extruded protein compositions including soy protein, gluten and pea proteins. Many studies have been conducted to optimize the composition, the properties of the extruded product and the process conditions as is described by Baune et al (https://doi.org/10.1016/j.fufo.2022.100181) and Schmid et al (https://doi.org/10.1111/1541-4337.13030). One approach is to mix the vegetable protein with another protein source, e.g. Brewer's spent grain.

In WO 2023/99270 and WO 2023/99271 ground brewer's spent grain is used in combination with soy protein concentrate to prepare extruded protein compositions under low moisture and under high moisture conditions, respectively.

WO 2023/57644 a protein fraction of brewer's spent grain was used in combination with either soy protein concentrate, soy protein isolate and yellow pea protein isolate. The amount of fibers introduced in the extruded protein compositions based on the Brewer's spent grain composition is relatively high. There is a need for improved extruded protein compositions.

The objective of the present invention is to provide novel extruded protein compositions.

The invention pertains to an extruded protein composition comprising a vegetable protein and a protein-containing composition from an aleurone-containing plant-based material, in particular brewer's spent grain, wherein the weight ratio of protein and fat is at most 14. The extruded protein composition of the invention reduces the amount of vegetable protein such as soy or pea protein. Moreover, a protein composition may originate from a process sidestream of an aleurone-containing plant-based material, in particular a sidestream of the beer brewing process, i.e brewer's spent grain. Consequently, the carbon footprint of the inventive composition is lower compared to commercial textured vegetable proteins (TVP) made from soy protein or pea protein. Moreover, the structure of the extruded composition is different as it is solid throughout the extruded protein composition, whereas the soy protein-based TVPs generally have a laminated structure and may exhibit a void in the center of the TVP. Without being bound by theory, it is believed that soy protein-based TVP forms a laminated structure, as can be determined using light microscopy and/or scanning electron microscopy (SEM). With SEM the inventors have found air droplets that were built in the matrix which also have the shape of a laminated structure. The laminated build-up may allow for a void in the center of the extrudate. Such a laminated structure was not observed in the extruded protein composition of the invention. In addition, the inventive extruded protein composition generally has a higher fat content compared to conventional TVPs, which is contra-intuitive as fat is generally perceived by the skilled person to lead to processing difficulties and undesirable properties of the resulting extrudates. The higher fat content allows for the use of flavouring agents which dissolve in fat. Additionally, less fat may be required in the food product comprising the inventive extruded protein composition. A further advantage is that the off-flavours present in the initial brewer's spent grain are partially or completely diminished during the extrusion process. Moreover, the protein composition, in particular from brewer's spent grain, may contain dietary fibers, and in particular β-glucans, which have a health benefit. It was further found that the extruded composition of the invention generally expands considerably after exiting the extruder, whereas the soy protein-based TVPs do not expand as much. The inventive composition can advantageously be used in food products, in particular in hybrid meat products, and may partially replace meat and/or meat alternative without significantly changing the sensory properties of the food product. The environmental impact of the meat-containing food product is considerably lower due to the lower carbon footprint of the extruded protein composition compared to meat.

In one embodiment, the extruded protein composition is a textured vegetable protein (TVP) or a high moisture meat analogue (HMMA). Such TVPs can be any TVP known in the art. Examples of such TVP include soy protein-based TVPs, gluten-based TVPs, and legume protein-based TVPs, which may be obtained by low moisture extrusion. Such HMMAs can be any HMMA known in the art. Examples of such HMMA include soy protein-based HMMAs, gluten-based HMMAs and legume protein-based HMMAs, which may be obtained by high moisture extrusion.

The extruded protein composition of the invention comprises protein and fat in a weight ratio of protein and fat of at most 14. The fat content is generally higher compared to conventional extruded protein compositions such as described in WO 2023/57644 in which the extruded protein compositions having a weight ratio of protein and fat exceeding 14 are disclosed. Preferably, the weight ratio of protein and fat is at most 13, more preferably at most 12, even more preferably at most 11 and most preferably at most 10, and preferably the weight ratio of protein and fat is at least 1, more preferably at least 2 and most preferably at least 5. It is also contemplated that a protein composition comprising brewer's spent grain is used of which fat is partially or completely removed.

In one embodiment, the inventive extruded protein composition comprises fat and fiber in a weight ratio of fat and fiber of at least 0.15. The weight ratio of fat and fiber is generally lower compared to conventional extruded protein compositions such as described in WO 2023/57644 in which the extruded protein compositions having a weight ratio of fat and fiber well below 0.15 are disclosed. Preferably, the weight ratio of fat and fiber is at least 0.2, more preferably at least 0.25 and most preferably at least 0.3, and preferably the weight ratio of fat and fiber is at most 10, more preferably at most 5 and most preferably at most 2.

The vegetable protein can be any vegetable protein known in the art and suitable for use in extruded protein compositions. In particular, such vegetable proteins are capable of forming a solid during low moisture extrusion and/or high moisture extrusion. Examples of such vegetable proteins include soy, wheat, legumes such as peas, and combinations thereof. The concentration of proteins may vary. Generally, the protein content is at least 50 wt%, preferably at least 60 wt%, more preferably at least 70 wt% and most preferably at least 80 wt%, and preferably at most 99 wt%, more preferably at least 95 wt% and most preferably at most 90 wt%, based on the total dry weight of the vegetable protein. In one embodiment, the vegetable protein is a protein concentrate or a protein isolate.

In one embodiment, the inventive extruded protein composition comprises at least 50 wt% vegetable protein, based on the total dry weight of the extruded protein composition. Preferably, the extruded protein composition comprises at least 60 wt% vegetable protein, more preferably at least 70 wt% vegetable protein and most preferably at least 80 wt% vegetable protein, and preferably at most 99 wt% vegetable protein, more preferably at least 95 wt% vegetable protein and most preferably at most 90 wt% vegetable protein, based on the total dry weight of the extruded protein composition.

The inventive extruded protein composition comprises a protein-containing composition from an aleurone-containing plant-based material, in particular brewer's spent grain. The aleurone-containing plant-based material can be any such material known in the art containing an aleurone layer. Preferably, the aleurone-containing plant-based material is a cereal grain. The cereal grain of the invention can be any cereal grain known in the art and which can be suitably used in the process of the invention. The cereal can be any cereal known in the art, and includes maize, rice, wheat, barley, sorghum, oat, millet, rye and triticale. The cereal grains suitable in the process of the invention generally comprise an aleurone layer and hence aleurone cells. In one embodiment, the cereal grains are processed. Processed cereal grains include spent grain originating from brewery or distillery processes, enzymatically treated cereal grain such as the solid cake obtained in producing plant-based drinks or milk, and cereal bran which is a by-product of milling in the production of refined grains (containing aleurone and pericarp). Examples of cereal spent grain include brewer's spent grain, oat spent grain, rice spent grain, sorghum spent grain and corn spent grain. Examples of enzymatically treated cereal grain include solids obtained from the production of oat milk, solids from the production of rice milk and solids obtained from the production of corn milk. Examples of enzymatically treated non-cereal grain include solids obtained from the production of almond milk, solids from the production of pea beverages and solids obtained from the production of soy drinks. Examples of cereal bran include oat bran, wheat bran, rice bran, sorghum bran and corn bran. The protein-containing composition is preferably prepared using the method disclosed in WO 2023/100147, the details of the process and protein-containing composition therein are incorporated herein by reference.

In one embodiment, the protein-containing composition comprises proteins of brewer's spent grain, characterized in that the protein-containing composition comprises at most 30 wt% insoluble HMWDF, at least 50 wt% proteins and at most 3 wt% lignin, based on the total dry weight of the protein-containing composition. The protein-containing composition is preferably prepared using the method disclosed in WO 2023/100146, the details of the process and protein-containing composition therein are incorporated herein by reference.

The protein-containing composition comprises at least 50 wt% protein, based on the total dry weight of the protein-containing composition. Preferably, the protein-containing composition comprises at most 99 wt% protein, more preferably at most 95 wt% protein, and most preferably at most 90 wt% protein, and preferably at least 55 wt% protein, more preferably at least 60 wt% of protein, based on the total dry weight of the protein-containing composition.

In a further embodiment, the aforementioned protein-containing composition comprises at least 15% by weight of glutamine, based on the total dry weight of proteins in the protein-containing composition. Preferably, the proteins of the protein-containing composition comprise at most 25 wt% glutamine, more preferably at most 20 wt% glutamine and most preferably at most 15 wt% glutamine and at least 18 wt% glutamine and more preferably at least 20 wt% glutamine from the total dry weight of the proteins in the protein-containing composition.

In one embodiment of the invention, the protein-containing composition comprises at least 1 wt% insoluble HMWDF, more preferably at least 5 wt% insoluble HMWDF and most preferably at least 10 wt% insoluble HMWDF, and at most 30 wt% insoluble HMWDF, more preferably at most 25 wt% insoluble HMWDF and more preferably at most 20 wt% insoluble HMWDF, based on the total dry weight of the protein-containing composition.

In one embodiment, the protein-containing composition comprises at least 10% of empty aleurone cells, based on the total number of aleurone cells. With the term "empty aleurone cells" is meant aleurone cells that do not contain protein. The aleurone layer comprises the aleurone cells which are cells having a cell wall and comprising protein and lipids. In conventional processes, these aleurone cells are generally not broken down and the proteins captured inside these cells generally remain a part of the coarse fiber fraction. Preferably, the protein-containing composition comprises at least 15% of empty aleurone cells, more preferably at least 20% of empty aleurone cells, even more preferably at least 30% of empty aleurone cells, even more preferably at least 40% of empty aleurone cells and most preferably at least 50% of empty aleurone cells, based on the total number of aleurone cells, and preferably at most 100% of empty aleurone cells, more preferably at most 95% of empty aleurone cells, more preferably at most 90% of empty aleurone cells, more preferably at most 80% of empty aleurone cells and most preferably at most 70% of empty aleurone cells, based on the total number of aleurone cells. The amount of empty aleurone cells can be determined using confocal scanning laser microscopy or scanning electron microscopy (SEM). A preferred method of confocal scanning laser microscopy is described by Filippidi et al (2014; doi:10.1002/adfm.201400359). It is noted that empty aleurone cells can be observed as intact cells or as part of cells; both intact and partial aleurone cells that do not contain protein should be considered when counting the number of empty aleurone cells. It is noted that the aleurone cells and cell walls as well as the protein need to be present in the microscopic image. The percentage of such empty cells can be determined by counting the number of empty cells or open cells (no red coloured protein present) and the number of aleurone cells containing protein (indicated by a red mass inside the cell walls); the percentage of empty aleurone cells is calculated by dividing the number of empty cells by the total number of aleurone cells).

In one embodiment, the protein-containing composition comprises a protein to aleurone cell area ratio of at most 0.9. Preferably, the protein to aleurone cell area ratio is at most 0.8, more preferably at most 0.7, even more preferably at most 0.6 and most preferably at most 0.5, and preferably at least 0.001, more preferably at least 0.01 and most preferably at least 0.1.

In one embodiment, the protein-containing composition comprises at least 40% of free protein, more preferably at least 50% of free protein, even more preferably at least 60% of free protein, even more preferably at least 70% of free protein and most preferably at least 75% of free protein, based on the total amount of protein, and preferably at most 99.99% of free protein, more preferably at most 99% of free protein, more preferably at most 95% of free protein, more preferably at most 90% of free protein and most preferably at most 85% of free protein, based on the total amount of protein.

In one embodiment, the protein-containing composition comprises at least 0.001% of encapsulated protein, more preferably at least 0.01% of encapsulated protein, even more preferably at least 0.05% of encapsulated protein, even more preferably at least 0.1% of encapsulated protein and most preferably at least 0.5% of encapsulated protein, based on the total amount of protein, and preferably at most 10% of encapsulated protein, more preferably at most 8% of encapsulated protein, more preferably at most 5% of encapsulated protein, more preferably at most 2% of encapsulated protein and most preferably at most 1% of encapsulated protein, based on the total amount of protein.

In one embodiment, the protein-containing composition comprises at least 20% of ruptured cells, based on the total number of aleurone cells. Preferably, the protein-containing composition comprises at least 25% of ruptured cells, more preferably at least 30% of ruptured cells, even more preferably at least 35% of ruptured cells, even more preferably at least 40% of ruptured cells and most preferably at least 50% of ruptured cells, based on the total number of aleurone cells, and preferably at most 100% of ruptured cells, more preferably at most 95% of ruptured cells, more preferably at most 90% of ruptured cells, more preferably at most 80% of ruptured cells and most preferably at most 70% of ruptured cells, based on the total number of aleurone cells. Generally, the number of ruptured cells will be higher for the protein-containing composition compared to the coarse fiber composition, while the total number of aleurone cells present in the protein-containing composition is significantly lower compared to the coarse fiber composition.

In one embodiment, the protein-containing composition comprises at most 80% of intact cells, based on the total number of aleurone cells. Preferably, the protein-containing composition comprises at most 75% of intact cells, more preferably at most 70% of intact cells, even more preferably at most 65% of intact cells, even more preferably at most 60% of intact cells and most preferably at most 50% of intact cells, based on the total number of aleurone cells, and preferably at most no intact cells, more preferably at least 5% of intact cells, more preferably at least 10% of intact cells, more preferably at least 20% of intact cells and most preferably at least 30% of intact cells, based on the total number of aleurone cells.

In one embodiment, the protein-containing composition comprises at least 0.1 wt% cellulose, more preferably at least 0.5 wt% cellulose, and most preferably at least 1 wt% cellulose, and preferably at most 10 wt% cellulose, more preferably at most 5 wt% cellulose and most preferably at most 4 wt% cellulose, based on the total dry weight of the protein-containing comprising composition.

In one additional embodiment, the protein-containing composition comprises at least 5 wt% (percent by weight) hemicellulose, more preferably at least 8 wt% hemicellulose and most preferably at least 10 wt% hemicellulose, and preferably at most 20 wt% hemicellulose, more preferably at most 17 wt% hemicellulose and most preferably at most 15 wt% hemicellulose, based on the total dry weight of the protein-containing composition.

In one embodiment of the invention, the protein-containing composition comprises at least 0.01 wt% lignin, more preferably at least 0.1 wt% lignin and most preferably at least 0.5 wt% lignin, and at most 2 wt% lignin, more preferably at most 1.5 wt% lignin and most preferably at most 1 wt% lignin, based on the total dry weight of the protein-containing composition.

In one embodiment, the protein-containing composition preferably comprises at least 10 wt% fat, more preferably at least 12 wt% fat and most preferably at least 15 wt% fat, and preferably at most 30 wt% fat, more preferably at most 25 wt% fat and most preferably at most 20 wt% fat, based on the total dry weight of the protein-containing composition.

In one embodiment of the invention, the weight ratio of hemicellulose and cellulose in the protein-containing composition is at least 2.0, more preferably at least 2.2 and most preferably at least 2.5, and preferably at most 4.0, more preferably at most 3.5 and most preferably at most 3.0.

In one embodiment of the invention, the weight ratio of hemicellulose and lignin in the protein-containing composition is at least 15, more preferably at least 18 and most preferably at least 20, and preferably at most 35, more preferably at most 30 and most preferably at most 25.

In one embodiment of the invention, the weight ratio of cellulose and lignin in the protein-containing composition is at least 5.0, more preferably at least 6.0 and most preferably at least 7.0, and preferably at most 12.0, more preferably at most 10.0 and most preferably at most 9.0.

In one embodiment of the invention, the weight ratio of protein and fat in the protein-containing composition is at least 2.5, more preferably at least 2.8 and most preferably at least 3.0, and preferably at most 5.0, more preferably at most 4.5 and most preferably at most 4.0.

In a further embodiment of the invention, the protein-containing composition comprises at most 5 wt% ash, more preferably at most 4 wt% ash and most preferably at most 3 wt% ash, and preferably at least 0.1 wt% ash, more preferably at least 0.5 wt% ash and most preferably at least 1 wt% ash, based on the total dry weight of the protein-containing composition. Ash content is determined using the ISO 5984:2002 method.

In a further embodiment of the invention, the protein-containing composition comprises at most 100 ppm gluten. Preferably, the protein-containing composition comprises at most 50 ppm gluten, more preferably at most 40 ppm gluten, even more preferably at most 30 ppm, and most preferably at most 20 ppm, and preferably at least 10 ppb gluten, more preferably at least 500 ppb, even more preferably at least 1 ppm and most preferably at least 2 ppm. In one embodiment, the protein-containing composition is gluten-free, i.e. the composition comprises less than 20 ppm. Gluten content was determined using AOAC 2012.01.

In one embodiment, the protein-containing composition comprises at least 0.01 wt% crude fiber, more preferably at least 0.1 wt% crude fiber and most preferably at least 0.5 wt% crude fiber, and preferably at most 5 wt% crude fiber, more preferably at most 3 wt% crude fiber and most preferably at most 2 wt% crude fiber, based on the total dry weight of the protein-containing composition. The crude fiber is determined using the ISO 68651 :2000 method.

In one embodiment, the protein-containing composition of the invention comprises particles having a d90 value of at most 200 µm. Preferably, the particles have a d90 value of at most 150 µm, preferably at most 125 µm, more preferably at most 100 µm, even more preferably at most 75 µm, even more preferably at most 50 µm, and most preferably at most 40 µm, and at least 1 µm, preferably at least 2 µm, more preferably at least 5 µm and most preferably at least 10 µm.

In a further embodiment, the protein-containing composition comprises at most 10 wt% water. Preferably, the protein-containing composition comprises at most 9 wt% of water, more preferably at most 8 wt%, even more preferably at most 7 wt% and most preferably at most 5 wt%, and preferably at least 0.001 wt%, more preferably at least 0.01 wt% and most preferably at least 0.1 wt%, based on the total dry weight of the protein-containing composition.

The amounts of protein, fiber, lignin, fat and the other components add up to 100% by weight of the protein-containing composition.

In one embodiment, the inventive extruded protein composition comprises at most 50 wt% protein-containing composition, based on the total dry weight of the extruded protein composition. Preferably, the extruded protein composition comprises at most 40 wt% protein-containing composition, more preferably at most 35 wt% protein-containing composition and most preferably at most 30 wt% protein-containing composition, and preferably at most 1 wt% protein-containing composition, more preferably at least 2 wt% protein-containing composition and most preferably at most 5 wt% protein-containing composition, based on the total dry weight of the extruded protein composition.

In one embodiment, the inventive extruded protein composition comprises at least 50 wt% protein, based on the total dry weight of the extruded protein composition. Preferably, the extruded protein composition comprises at least 55 wt% protein, more preferably at least 60 wt% protein and most preferably at least 65 wt% protein, and preferably at most 99 wt% protein, more preferably at least 95 wt% protein and most preferably at most 90 wt% protein, based on the total dry weight of the extruded protein composition. With the term "protein" in this context is meant the total amount of protein, i.e the sum of the vegetable protein and the protein-containing composition from an aleurone-containing plant-based material, preferably Brewer's spent grain. Various methods have been described in literature to determine the protein content. For the purposes of this application, the Kjeldahl method is used to determine the nitrogen content, which is then converted to protein content. The Kjeldahl is well established and well known to the person skilled in the art. In this application the Kjeldahl method is performed by hydrolyzing a sample using H₂SO₄ at 420°C for 2 hours, during which the proteins will be converted to ammonia. The generated ammonia is distilled off and the amount of nitrogen is measured by titration. The amount of protein is calculated by multiplying the nitrogen content by the conversion factor of 6.25 (nitrogen to protein factor).

In one embodiment, the inventive extruded protein composition comprises at least 4 wt% fat, based on the total dry weight of the extruded protein composition. Preferably, the extruded fat composition comprises at least 5 wt% fat, more preferably at least 6 wt% fat and most preferably at least 7 wt% fat, and preferably at most 15 wt% fat, more preferably at most 12 wt% fat and most preferably at most 10 wt% fat, based on the total dry weight of the extruded protein composition. The amount of fat can be determined with methods known in the art including organic solvent extraction. An example of such a technique is the ISO 6492 method.

In one embodiment, the inventive extruded protein composition comprises at most 15 wt% crude fiber, based on the total dry weight of the extruded protein composition. Preferably, the extruded fat composition comprises at most 12 wt% crude fiber, more preferably at most 10 wt% crude fiber and most preferably at most 8 wt% crude fiber, and preferably at least 0.1 wt% crude fiber, more preferably at least 0.5 wt% crude fiber and most preferably at least 1 wt% crude fiber, based on the total dry weight of the extruded protein composition. The crude fiber is determined using the ISO 68651 :2000 method.

In one embodiment, the extruded protein composition comprises water. The amount of water present in the extruded protein composition can be determined by the skilled person. Generally, low moisture extrusion (for preparing TVPs) is performed using less than 40 wt% water, based on the total weight of the extruded protein composition, and when high moisture extrusion (for preparing HMMAs) is performed at least 40 wt% water, based on the total weight of the extruded protein composition, is used. Preferably, the extruded protein composition comprises at least 1 wt% of water, more preferably at least 5 wt% of water, even more preferably at least 10 wt% of water and most preferably at least 15 wt% of water, and preferably at most 70 wt% of water, more preferably at most 65 wt% of water and most preferably at most 60 wt% of water, based on the total weight of the extruded protein composition.

In one embodiment, the inventive protein composition comprises an additive. The additive can be any additive known in the art. Such additives include (modified) cellulose, binders, (dietary) fibers, pigments, (inorganic) fillers, raising agents, flavouring agents, anti-oxidants, preservatives, sugars and colouring agents.

In one embodiment of the invention, the extruded protein composition of the invention comprises at least 0.1 wt% of the additive. Preferably, the inventive extruded protein composition comprises at least 0.2 wt% additive, more preferably at least 0.5 wt% additive, even more preferably at least 1 wt% additive and most preferably at least 2 wt% additive, and preferably at most 20 wt% additive, more preferably at most 15 wt% additive and most preferably at most 10 wt% additive, based on the total dry weight of the extruded protein composition.

The amounts of vegetable protein, protein-containing composition from an aleurone-containing plant-based material, water, additives and any other components add up to 100% by weight of the extruded protein composition.

The invention further pertains to a meat substitute comprising the extruded protein composition of the invention and a binder. The binder can be any binder known in the art. Examples of such binders include thickeners such as methyl cellulose, carrageenan and konjac.

The invention further pertains to a food product comprising the extruded protein composition of the invention. The invention further pertains to a food product comprising a meat substitute comprising the extruded protein composition of the invention and a binder.

The invention further pertains to a food product comprising meat and the extruded protein composition of the invention. The term "meat" refers to any meat known in the art. Preferably, meat comprises animal tissue, in particular animal muscle tissue or flesh of an animal. In one embodiment, the meat is animal tissue selected from at least one of chicken, goat, pork, lamb, horse and cow. Preferably, the meat is selected from chicken, pork and cow.

In one embodiment, the food product of the invention comprises at least 50 wt% meat, based on the total weight of the food product. Preferably, the inventive food product comprises at least 60 wt% meat, more preferably at least 70 wt% meat, even more preferably at least 80 wt% meat and most preferably at least 85 wt% meat, and preferably at most 99.9 wt% meat, more preferably at most 99 wt% meat, more preferably at most 98 wt% meat and most preferably at most 95 wt% meat, based on the total weight of the food product.

In one embodiment, the food product of the invention comprises at least 0.1 wt% of the inventive extruded protein composition, based on the total weight of the food product. Preferably, the inventive food product comprises at least 1 wt% extruded protein composition, more preferably at least 2 wt% extruded protein composition, even more preferably at least 5 wt% extruded protein composition and most preferably at least 10 wt% extruded protein composition, and preferably at most 50 wt% extruded protein composition, more preferably at most 40 wt% extruded protein composition, more preferably at most 35 wt% extruded protein composition and most preferably at most 30 wt% extruded protein composition, based on the total weight of the food product.

In one embodiment, the food product of the invention comprises at least 1 wt% water, based on the total weight of the food product. Preferably, the inventive food product comprises at least 2 wt% water, more preferably at least 5 wt% water, even more preferably at least 8 wt% water and most preferably at least 10 wt% water, and preferably at most 50 wt% water, more preferably at most 40 wt% water, even more preferably at most 30 wt% water and most preferably at most 20 wt% water, based on the total weight of the food product.

In another embodiment of the invention, the food product may comprise additional proteins. The additional proteins may be any protein known in the art. The protein may be animal-based or plant-based. Preferably, the protein is plant-based. The additional protein may be introduced for nutritional, sensorial and/or textural purposes. In one embodiment, the food product of the invention comprises at least 0.1 wt% additional protein, based on the total weight of the food product. Preferably, the inventive food product comprises at least 0.2 wt% additional protein, more preferably at least 0.3 wt% additional protein, even more preferably at least 0.5 wt% additional protein and most preferably at least 1 wt% additional protein, and preferably at most 20 wt% additional protein, more preferably at most 15 wt% additional protein and most preferably at most 10 wt% additional protein, based on the total weight of the food product.

In one embodiment, the inventive food product comprises an additive. The additive can be any additive known in the art. Such additives include (modified) cellulose, binders, (dietary) fibers, pigments, (inorganic) fillers, fat, salts, pH adjusting agents, raising agents, flavouring agents, anti-oxidants, preservatives, sugars and colouring agents.

In one embodiment of the invention, the food product of the invention comprises at least 0.1 wt% of the additive. Preferably, the inventive food product comprises at least 0.2 wt% additive, more preferably at least 0.5 wt% additive, even more preferably at least 1 wt% additive and most preferably at least 2 wt% additive, and preferably at most 20 wt% additive, more preferably at most 15 wt% additive and most preferably at most 10 wt% additive, based on the total weight of the food product.

The amounts of extruded protein composition, meat, water, additives and any other components add up to 100% by weight of the food product.

The food product of the invention can be any food product known in the art comprising meat and/or extruded protein composition. In one embodiment, the food product is a hybrid meat product. Preferably, the food product comprises meat which was ground, preferably in a meat grinder. Examples of food products comprising meat include (freshly) ground meat, burgers, sausages, nuggets e.g. chicken nuggets, meat balls, meat loaf, and other processed meat products. Examples of food products without meat include vegetarian or vegan burgers, vegetable balls, vegan falafel, vegetable snacks and vegan nuggets.

The invention further pertains to a process for preparing an extruded protein composition comprising a vegetable protein and a protein-containing composition from an aleurone-containing plant-based material, preferably brewer's spent grain, wherein the weight ratio of protein and fat is at most 14 comprising the steps of:
(a) providing a mixture of a vegetable protein and a protein-containing composition from an aleurone-containing plant-based material, preferably brewer's spent grain, wherein the weight ratio of protein and fat is at most 14, and optionally water;
(b) extruding said mixture to obtain an extruded protein composition; and
(c) optionally removing water from the extruded protein composition.

The inventive process generally leads to the extruded protein composition of the invention.

In step (a) of the inventive process, a mixture of a vegetable protein and a protein-containing composition from an aleurone-containing plant-based material, preferably brewer's spent grain, wherein the weight ratio of protein and fat is at most 14, and optionally water is provided. The vegetable protein suitable in step (a) can be any vegetable protein known in the art. The protein-containing composition from an aleurone-containing plant-based material, preferably brewer's spent grain, wherein the weight ratio of protein and fat is at most 14 has a relatively high fat content. Examples of such protein-containing compositions can be found in WO 2023/100146 and in WO 2023/100147.

Optionally, the mixture comprises water, in particular additional water. Depending on whether the desired product is a textured protein composition (TVP) or a high moisture meat analogue (HMMA), additional water is required. The amounts of water are indicated above.

In one embodiment, the temperature of the mixture in step (a) is at most 20 °C, preferably the temperature is at most 15°C, more preferably at most 10°C and most preferably at most 5°C, and preferably at least -10°C, more preferably at least -5°C and most preferably at least 0°C.

In optional step (b) of the inventive process the mixture of step (a) is extruded to obtain an extruded protein composition. The extrusion step (b) can be performed using any extrusion apparatus known in the art and suitable for preparing an extruded protein composition. Examples of suitable extruders include single screw extruders, twin-screw extruders and PowerHeater^{®} Technology.

In one embodiment, the temperature in step (b) can vary during the extrusion step as the extruder may have multiple regions that may be kept at different temperatures. The maximum temperature used in this step (b) is generally at least 80°C. Preferably, the maximum temperature is at least 90 °C, preferably the maximum temperature is at least 100°C, more preferably at least 110°C and most preferably at least 120°C, and preferably at most 180°C, more preferably at most 170°C and most preferably at most 160°C.

In optional step (c) of the inventive process, water is removed from the extruded protein composition of step(b). Water is removed when the extruded protein composition comprises in excess of 10 wt% water, based on the total weight of the extruded protein composition. The water removal step of step (c) generally leads to an extruded protein composition comprising at most 10 wt% water, based on the total weight of the extruded protein composition. The removal of water can be performed using any known method for water removal. Examples of such methods include drying in an oven, drying in a fluidized bed, a spinning flash dryer, a belt dryer, and a drum dryer.

In one embodiment, the temperature in step (c) is maintained at a temperature below 100°C. Preferably, the temperature is at most 95 °C, preferably the temperature is at most 90°C, more preferably at most 85°C and most preferably at most 80°C, and preferably at least 50°C, more preferably at least 55°C and most preferably at least 60°C.

In optional step (d) of the inventive process, the extruded protein composition is frozen. The freezing process can be performed using methods known in the art. In one embodiment, the temperature in step (e) is maintained at a temperature of at most 0°C. Preferably, the temperature is at most -5°C, more preferably at most -10°C, more preferably at most -15°C and most preferably at most -18°C, and preferably at least -40°C, more preferably at least -30°C, and most preferably at least -25°C.

The invention is exemplified in the following Examples.

### Examples

### Examples 1 to 4: extruded protein compositions from soy protein and Brewer's spent grain

A protein-containing composition from Brewer's spent grain was prepared similar to the process of Example 1 of WO 2023/100146. The protein-containing composition comprises 50 wt% protein, 20 wt% fat and 30 wt% fiber, based on the total weight of the protein-containing composition. The protein-containing composition comprises 1.6 wt% crude fiber which is very low compared to conventional protein fractions obtained from BSG. The d90 of the particles in the protein-containing composition is 120 µm.

The protein-containing composition contained 71% of ruptured cells, based on the total number of aleurone cells as determined using scanning electron microscopy (see method below). The total number of aleurone cells assessed were 38 (in 20 SEM images of the protein-containing composition). The protein-containing composition comprised mainly of free protein.

The soy protein concentrate used was Arcon S (ex ADM), which comprises 72 wt% protein, 24 wt% fiber and 3 wt% fat.

Mixtures of the soy protein concentrate and protein-containing composition from Brewer's spent grain were prepared as indicated in the Table below.

**Table 1: Composition of the mixture**

| Ingredients | Comparative Example A (wt%) | Example 1 (wt%) | Example 2 (wt%) | Example 3 (wt%) | Example 4 (wt%) |
|---|---|---|---|---|---|
| Soy protein concentrate | 100 | 85.0 | 80.0 | 75.0 | 70.0 |
| Protein composition from Brewer's spent grain | - | 15.0 | 20.0 | 25.0 | 30.0 |

The mixture and water were fed to a twin-screw extruder in a weight ratio of 3:1. The mixture was extruded under conditions of mass flow of 16 kg/h, screw speed of 500 rpm, temperature ranging from 40 to 130°C, and a die plate having 4 holes of 2 mm. The extruded protein compositions of Examples 1 to 4 were cut.

Various properties of the extruded protein compositions were determined and tabulated below.

**Table 2: Properties of the extruded protein compositions**

| Property | Comparative Example A (wt%) | Example 1 (wt%) | Example 2 (wt%) | Example 3 (wt%) | Example 4 (wt%) |
|---|---|---|---|---|---|
| Dry matter (wt%) | | 81.5 | 79.8 | 76.5 | 76.6 |
| Average length (mm) | 9 | 8 | 8 | 10 | - |
| Rehydration factor | 3.9 | 4.2 | 3.3 | 3.1 | 2.8 |
| Protein (wt%) | | | | 66.3 | |
| Fat (wt%) | | | | 5.7 | |
| Fiber (wt%) | | | | 28.0 | |
| Protein/fat | | | | 11.6 | |
| Fat/fiber | | | | 0.20 | |

The Table shows that a higher amount of the protein-containing composition in the extruded protein compositions the better water is maintained in the extrudates. The rehydration factor decreasing for the inventive extruded protein compositions with increasing amounts of the protein composition from Brewer's spent grain.

The extruded protein composition of Example 3 was studied using scanning electron microscopy (in combination with elemental analysis). images were captured using a Hitachi TM3030plus microscope operating at 15kV in BE/SE mix-mode. Furthermore, elemental analysis (EDX) was performed using Oxford Instruments' AzTECone software. SEM images revealed the presence of two phases . It is believed that one phase is the continuous phase rich in soy protein, and the other phase is rich in proteins and fibers from Brewer's spent grain. Fat particles could be identified (largest particle size below 30 µm) which is positioned mainly in the phase rich in Brewer's spent grain proteins. No pockets containing fat could be identified. The phase rich in Brewer's spent grain proteins appear to have a higher water content compared to the soy protein-rich phase as determined using elemental analysis). This SEM study further revealed that the extrudate is solid and porous across the whole cross-section of the extrudate, and no laminates were observed.

For comparison, the extruded protein composition of Comparative Example A was studied, which revealed a laminated structure and the center of the cross-section of the extrudate is hollow. In the continuous phase, pockets richer in water were observed. The presence of fat could not be determined.

### Examples 5 to 8: vegetarian burger

Vegetarian burgers were prepared having the compositions as indicated in the Table below.

**Table 3: Ingredients of the vegetarian burgers**

| | Ingredients | Example 5 (wt%) | Example 6 (wt%) | Example 7 (wt%) | Example 8 (wt%) |
|---|---|---|---|---|---|
| A1 | TVP of Ex. 1 | 18.00 | - | - | - |
| A1 | TVP of Ex. 2 | - | 18.00 | - | - |
| A1 | TVP of Ex. 3 | - | - | 18.00 | - |
| A1 | TVP of Ex. 4 | - | - | - | 18.00 |
| A2 | water | 47.00 | 47.00 | 47.00 | 47.00 |
| B | Binder Phase | 24.40 | 24.40 | 24.40 | 24.40 |
| B1 | Rapeseed oil | 20.49 | 20.49 | 20.49 | 20.49 |
| B2 | Methyl cellulose | 5.74 | 5.74 | 5.74 | 5.74 |
| B3 | Ice water | 73.77 | 73.77 | 73.77 | 73.77 |
| C | Native potato starch | 2.20 | 2.20 | 2.20 | 2.20 |
| C | Native corn starch | 2.20 | 2.20 | 2.20 | 2.20 |
| C | Psyllium seed husk powder | 1.10 | 1.10 | 1.10 | 1.10 |
| C | salt | 1.10 | 1.10 | 1.10 | 1.10 |
| C | Hamburger seasoning | 1.60 | 1.60 | 1.60 | 1.60 |
| C | Sugar can fiber | 0.80 | 0.80 | 0.80 | 0.80 |
| C | dextrose | 1.5 | 1.5 | 1.5 | 1.5 |
| D | Lactic acid solution (88%) | 0.1 | 0.1 | 0.1 | 0.1 |

The vegetarian burgers were prepared using the following steps:
- Rehydrate the TVP (A1) in water (A2) for 30 minutes
- Mix rapeseed oil (B1) and methyl cellulose (B2) in kitchen mixer for 1 minute
- Slowly add ice water (B3) to the mixture while stirring
- mix hydrated TVP (A) with binder (B) in a Hobart mixer for 2 minutes
- Add ingredients C (potato starch to dextrose) and add to the AB mixture in the Hobart mixer, and continue mixing for 2 minutes
- Add lactic acid (D) and continue mixing for 1 minute
- Shape burgers of 110g using a burger press
- Fry the burgers for 40 seconds in oil at 180°C
- shock freeze the burgers and store in freezer at -18°C
- defrost the burgers
- pan fry the burgers on an induction plate for 3 minutes on each side

The cook yield (weight percentage of remaining product after cooking), firmness, and toughness of the pan-fried vegetarian burgers were determined and tabulated in the Table below.

**Table 4: Cook yield, firmness, and toughness of the vegetarian burgers**

| | Example 5 | Example 6 | Example 7 | Example 8 |
|---|---|---|---|---|
| Average cook yield [%] | 93.8 | 91.8 | 91.0 | 91.0 |
| Firmness [kg] | 2.6 | 2.8 | 3.0 | 3.5 |
| Toughness [kg.s] | 3.6 | 4.2 | 4.4 | 5.0 |

From the Table it can be deduced that the vegetarian burgers of Examples 5 to 8 have a similar cooking yield. These vegetarian burgers according to the invention reveal an increasing firmness and toughness with higher amounts of proteins from Brewer's spent grain.

### Texture analysis

To measure the possible difference between the two recipes in hardness (Maximum shear force) and toughness (Work of shear) the following texture measurement was carried out. Table 2 contains the Texture Analyzer settings needed for hybrid burgers. Two burgers per recipe were analyzed and each burger was analysed five times.

**Table 5. Texture Analyzer settings for Hybrid burgers.**

| **TA settings** | | |
|---|---|---|
| Load cell | 30 | kg |
| Probe | Knife blade with heavy duty platform | |
| Pre-test speed | N/A | |
| Test speed | 5 | mm/sec |
| Post-test speed | 10 | mm/sec |
| Distance | 10 | mm |
| Trigger Force | 100 | g |
| Mode | Measure force in compression | |

Sample preparation and performing the measurement:
1. Pan fry burgers 4 min on both sides on induction hob;
2. Make a strip of 60 mm by cutting edges of the burger;
3. Let the burgers rest for 4 min before performing the measurement;
4. Place the sample (60 mm width) under the blade so that the blade edge is within the diameter of the sample;
5. It is possible to conduct 5 tests on one burger. Make sure the ends are not 'lifted' by using your fingers.

### Examples 9 to 12: extruded protein compositions from pea protein and Brewer's spent grain

A protein-containing composition from Brewer's spent grain was prepared similar to the process of Example 1.

The pea protein isolate used was Cosucra Pisane ES (ex Cosucra), which comprises 85 wt% protein, 8 wt% fiber and 4 wt% fat.

Mixtures of the pea protein isolate and protein-containing composition from Brewer's spent grain were prepared as indicated in the Table below.

**Table 6: Composition of the mixture**

| Ingredients | Comparative Example B (wt%) | Example 9 (wt%) | Example 10 (wt%) | Example 11 (wt%) | Example 12 (wt%) |
|---|---|---|---|---|---|
| Pea protein isolate | 100 | 85.0 | 80.0 | 75.0 | 70.0 |
| Protein composition from Brewer's spent grain | - | 15.0 | 20.0 | 25.0 | 30.0 |

The mixture and water were fed to a twin-screw extruder in a weight ratio of 4:1. The mixture was extruded under conditions of mass flow of 20 kg/h, screw speed of 700 rpm, temperature ranging from 40 to 140°C, and a die plate having 3 holes of 2 mm. The extruded protein compositions of Examples 9 to 12 were cut.

Various properties of the extruded protein compositions were determined and tabulated below.

**Table 7: Properties of the extruded protein compositions**

| Property | Comparative Example B (wt%) | Example 9 (wt%) | Example 10 (wt%) | Example 11 (wt%) | Example 12 (wt%) |
|---|---|---|---|---|---|
| Dry matter (wt%) | | 84.2 | 84.0 | 84.2 | 82.2 |
| Average length (mm) | 9 | 6 | 14 | 15 | 8 |
| Rehydration factor | 3.9 | 2.7 | 2.8 | 2.7 | 2.7 |
| Protein (wt%) | | | | 73.8 | |
| Fat (wt%) | | | | 12.5 | |
| Fiber (wt%) | | | | 12.0 | |
| Protein/fat | | | | 5.90 | |
| Fat/fiber | | | | 1.04 | |

The Table shows that water retention does not significantly alter with a higher amount of the protein-containing composition in the extruded protein compositions. The rehydration factor is similar for the inventive extruded protein compositions, but is considerably lower than the extrudates of Comparative Example B.

The extruded protein composition of Example 11 was studied using scanning electron microscopy (in combination with elemental analysis), which revealed the presence of two phases. It is believed that one phase is the continuous phase rich in pea protein, and the other phase is rich in proteins and fibers from Brewer's spent grain. Fat particles could be identified (largest particle size below 30 µm) which is positioned mainly in the phase rich in Brewer's spent grain proteins. No pockets containing fat could be identified. This SEM study further revealed that the extrudate is solid and porous across the whole cross-section of the extrudate, and no laminates were observed.

### Examples 13 to 16: vegetarian burger

Vegetarian burgers were prepared having the compositions as indicated in the Table below.

The vegetarian burgers were prepared using the following steps:
- Rehydrate the TVP (A1) in water (A2) for 30 minutes
- Mix rapeseed oil (B1) and methyl cellulose (B2) in kitchen mixer for 1 minute
- Slowly add ice water (B3) to the mixture while stirring
- mix hydrated TVP (A) with binder (B) in a Hobart mixer for 2 minutes
- Add ingredients C (potato starch to dextrose) and add to the AB mixture in the Hobart mixer, and continue mixing for 2 minutes
- Add lactic acid (D) and continue mixing for 1 minute
- Shape burgers of 110g using a burger press
- Fry the burgers for 40 seconds in oil at 180°C
- shock freeze the burgers and store in freezer at -18°C
- defrost the burgers
- pan fry the burgers on an induction plate for 3 minutes on each side

**Table 8: Ingredients of the vegetarian burgers**

| | Ingredients | Example 13 (wt%) | Example 14 (wt%) | Example 15 (wt%) | Example 16 (wt%) |
|---|---|---|---|---|---|
| A1 | TVP of Ex. 9 | 18.00 | - | - | - |
| A1 | TVP of Ex. 10 | - | 18.00 | - | - |
| A1 | TVP of Ex. 11 | - | - | 18.00 | - |
| A1 | TVP of Ex. 12 | - | - | - | 18.00 |
| A2 | water | 47.00 | 47.00 | 47.00 | 47.00 |
| B | Binder Phase | 24.40 | 24.40 | 24.40 | 24.40 |
| B1 | Rapeseed oil | 20.49 | 20.49 | 20.49 | 20.49 |
| B2 | Methyl cellulose | 5.74 | 5.74 | 5.74 | 5.74 |
| B3 | Ice water | 73.77 | 73.77 | 73.77 | 73.77 |
| C | Native potato starch | 2.20 | 2.20 | 2.20 | 2.20 |
| C | Native corn starch | 2.20 | 2.20 | 2.20 | 2.20 |
| C | Psyllium seed husk powder | 1.10 | 1.10 | 1.10 | 1.10 |
| C | salt | 1.10 | 1.10 | 1.10 | 1.10 |
| C | Hamburger seasoning | 1.60 | 1.60 | 1.60 | 1.60 |
| C | Sugar can fiber | 0.80 | 0.80 | 0.80 | 0.80 |
| C | dextrose | 1.5 | 1.5 | 1.5 | 1.5 |
| D | Lactic acid solution (88%) | 0.1 | 0.1 | 0.1 | 0.1 |

The cook yield (weight percentage of remaining product after cooking), firmness, and toughness of the pan-fried vegetarian burgers were determined and tabulated in the Table below.

**Table 9: Cook yield, firmness, and toughness of the vegetarian burgers**

| | Example 13 | Example 14 | Example 15 | Example 16 |
|---|---|---|---|---|
| Average cook yield [%] | 89.5 | 89.0 | 93.0 | 92.8 |
| Firmness [kg] | 3.1 | 3.0 | 3.0 | 2.5 |
| Toughness [kg.s] | 4.2 | 4.2 | 4.1 | 3.6 |

From the Table it can be deduced that the vegetarian burgers of Examples 13 to 16 have a similar cooking yield. These vegetarian burgers according to the invention reveal similar firmness and toughness with higher amounts of proteins from Brewer's spent grain.

## Claims

1. Extruded protein composition comprising a vegetable protein and a protein-containing composition from an aleurone-containing plant-based material, wherein the weight ratio of protein and fat is at most 14.

2. Extruded protein composition according to claim 1 wherein the weight ratio of fat and fiber is at least 0.15.

3. Extruded protein composition according to any one of the preceding claims wherein the aleurone-containing plant-based material is Brewer's spent grain.

4. Extruded protein composition according to any one of the preceding claims wherein the extruded protein composition is a textured vegetable protein (TVP) or a high moisture meat analogue (HMMA).

5. Extruded protein composition according to any one of the preceding claims wherein the vegetable protein is a legume protein.

6. Extruded protein composition according to any one of the preceding claims wherein protein-containing composition comprises at least 30 wt% of protein and at most 30 wt% fiber.

7. Extruded protein composition according to any one of the preceding claims wherein the protein-containing composition comprises at least 10 wt% fat.

8. Extruded protein composition according to any one of the preceding claims wherein the protein-containing composition comprises at least 10% of empty aleurone cells, based on the total number of aleurone cells.

9. Extruded protein composition according to any one of the preceding claims comprising at least 50 wt% protein.

10. A process for preparing an extruded protein composition comprising a vegetable protein and a protein-containing composition from an aleurone-containing plant-based material wherein the weight ratio of protein and fat is at most 14 comprising the steps of:
(a) providing a mixture of a vegetable protein and a protein-containing composition from brewer's spent grain wherein the weight ratio of protein and fat is at most 14, and optionally water;
(b) extruding said mixture to obtain an extruded protein composition; and
(c) optionally removing water from the extruded protein composition.

11. Process according to claim 10 wherein the aleurone-containing plant-based material is Brewer's spent grain.
